Europäisches Patentamt

European Patent Office

Office européen des brevets

(11) Veröffentlichungsnummer : **0 074 510**
**B1**

(12) **EUROPÄISCHE PATENTSCHRIFT**

(45) Veröffentlichungstag der Patentschrift :
**17.10.84**

(21) Anmeldenummer : **82107620.5**

(22) Anmeldetag : **20.08.82**

(51) Int. Cl.³ : **C 09 B 33/22// D06P1/06**

(54) **Neue wasserlösliche Trisazofarbstoffe, Verfahren zu Ihrer Herstellung und Ihre Verwendung zum Färben von Leder und Pelz.**

(30) Priorität : **25.08.81 DE 3133552**

(43) Veröffentlichungstag der Anmeldung :
**23.03.83 Patentblatt 83/12**

(45) Bekanntmachung des Hinweises auf die Patenterteilung : **17.10.84 Patentblatt 84/42**

(84) Benannte Vertragsstaaten :
**AT CH DE FR IT LI SE**

(56) Entgegenhaltungen :
**FR-A- 2 006 380**
**GB-A-  779 487**

(73) Patentinhaber : **HOECHST AKTIENGESELLSCHAFT**
**Postfach 80 03 20**
**D-6230 Frankfurt am Main 80 (DE)**

(72) Erfinder : **Sommer, Karl, Dr.**
**Thewaltstrasse 6**
**D-6240 Königstein/Taunus (DE)**
Erfinder : **Armbrecht, Norbert**
**Bahnstrasse 75**
**D-6231 Sulzbach (DE)**

**0 074 510**

**Beschreibung**

Die Erfindung betrifft neue wasserlösliche Trisazofarbstoffe der allgemeinen Formel

4-Nitro-4'-aminodiphenylamin-2-sulfonsäure → A → 3,3'-Dihydroxydiphenylamin ← B

worin A die 1-Amino-8-naphthol-3,6-disulfonsäure oder 1-Amino-8-naphthol-4,6-disulfonsäure oder Gemische der beiden Verbindungen bedeutet, und B das 1-(3'-bzw. 4'-Aminophenyl)-3-methyl-5-pyrazolon ist, Verfahren zu deren Herstellung und deren Anwendung zum Färben von Leder und Pelz. Die Herstellung der Farbstoffe erfolgt, indem man nach allgemein bekannten Verfahren die Komponente A diazotiert und mit 3,3'-Dihydroxy-diphenylamin zum Monoazofarbstoff kuppelt und diesen mit diazotierter Komponente B zum Disazofarbstoff umsetzt und diesen durch Vereinigung mit diazotierter 4-Nitro-4'-amino-diphenylamin-2-sulfonsäure in den Trisazofarbstoff überführt bzw. indem man wie beschrieben verfährt mit der Abänderung, daß die Komponente B und die 4-Nitro-4'-aminodiphenylamin-2-sulfonsäure in der Reihenfolge der Umsetzung vertauscht werden.

Die erfindungsgemäß erhaltenen Trisazofarbstoffe sind gut wasserlöslich und eignen sich besonders zum Färben von Leder und Pelzvelour. Die dunkelbraunen Färbungen zeigen gute Säurebeständigkeit, gutes Egalisier- und Durchfärbevermöger, gute Wasser-, Wasch-, Schweiß-, und Lösungsmittelechtheiten, gute Lichtechtheit und einwandfreie Färbbarkeit in hartem Wasser.

Die verfahrensgemäß erhältlichen neuen Farbstoffe färben Boxcalf und Rindbox, gegebenenfalls in Gegenwart von Fettungsmitteln und Egalisierhilfsmitteln, nach Eingehen in eine 50-60 °C warme Flotte innerhalb einer Stunde. Zum Schluß wird der Farbstoff durch eine Nachbehandlung mit Ameisensäure fixiert.

Schleifbox wird durch Aufspritzen einer ammoniakhaltigen wäßrig-äthanolischen Lösung des Farbstoffs, die noch ein Egalisierhilfsmittel enthalten kann, gefärbt. Bei normal saugendem Leder kann die Farbstofflösung auch mit einer Bürste aufgetragen werden. Spaltvelour wird nach zweistündigem Aufwalken durch Eingehen in eine 55 °C warme Lösung des Farbstoffs, die gegebenenfalls noch Fettungsmittel und Egalisierhilfsmittel enthält, zwei Stunden lang gefärbt und dann mit Ameisensäure fixiert.

Die erfindungsgemäßen Farbstoffe zeichnen sich gegenüber den in der deutschen Patentschrift 904 229 genannten Farbstoffen durch eine gelbstichigere Nuance aus, die durch die Komponente B bedingt und im allgemeinen schwer zu realisieren ist. Weiterhin erhält man mit den erfindungsgemäßen Farbstoffen auf Leder und Pelz kräftige dunkelbraune Färbungen ohne den bei gelbstichigen Nuancen sonst üblichen Farbstärkeabfall.

Pelzvelour wird nach einer wäßrig-ammoniakalischen Vorbehandlung eventuell unter Zusatz von Hilfsmitteln drei Stunden bei 25 °C gefärbt und anschließend gespült.

In den folgenden Beispielen wird die Erfindung näher erläutert. Angaben über Teile und Prozente beziehen sich hierbei, soweit nicht anders vermerkt ist, auf das Gewicht.

## Beispiel 1

Man löst 31,9 Gewichtsteile 1-Amino-8-naphthol-3,6-disulfonsäure in 100 Volumenteilen Wasser und 10 Volumenteilen 33-gewichtsprozentiger Natronlauge (pH-Wert der Lösung etwa 8) und gibt 15 Volumenteile Natriumnitritlösung 40 %ig zu dieser Lösung. Dann läßt man das Gemisch unter gutem Rühren bei etwa 20 °C in ein Gemisch aus 35 Volumenteilen konzentrierter Salzsäure und 100 Volumenteilen Wasser eintropfen. Die braungelbe Diazosuspension wird noch eine Stunde nachgerührt. Während dieser Zeit muß noch ein Überschuß an salpetriger Säure vorhanden sein, der anschließend durch Zugabe von wenig fester Amidosulfonsäure beseitigt wird.

24,1 Gewichtsteile 3,3'-Dihydroxy-diphenylamin werden über Nacht in 200 Volumenteilen Wasser und 20 Volumenteilen 33-gewichtsprozentiger Natronlauge angerührt und gelöst. Unter gutem Rühren gießt man dann die oben erhaltene Diazosuspension von 1-Amino-8-naphthol-3,6-disulfonsäure in die alkalische Lösung von 3,3'-Dihydroxydiphenylamin bei 15-20 °C ein. Danach hat das Reaktionsgemisch einen pH-Wert von etwa 5.

Man stellt mit ca. 25 Volumenteilen 33-gewichtsprozentiger Natronlauge auf pH 10,9 und läßt eine Stunde bei Raumtemperatur rühren.

46,4 Gewichtsteile 4-Nitro-4'-amino-diphenylamin-2-sulphonsäure werden über Nacht in 300 Volumenteilen Wasser und 15 Volumenteilen 33-gewichtsprozentiger Natronlauge bei Raumtemperatur angerührt und gelöst. Zu dieser Lösung gibt man 15 Volumenteile Natriumnitritlösung 40 %ig und tropft dieses Gemisch bei ca. 20 °C in 35 Volumenteile konzentrierte Salsäure und 50 Volumenteile Wasser ein. Man rührt eine Stunde nach und nimmt den Überschuß an salpetriger Säure mit wenig fester Amidosulfonsäure weg.

Anschließend wird die Diazosuspension von 4-Nitro-4'-amino-diphenylamin-2-sulfonsäure in die Lösung des Monoazofarbstoffs eingegossen und eine Stunde bei Raumtemperatur nachgerührt. Es stellt sich ein pH-Wert von ca. 6 ein. Mit etwa 25 Volumenteilen 33-gewichtsprozentiger Natronlauge stellt man bei 15-20 °C auf pH 10,9 und läßt eine Stunde bei Raumtemperatur rühren.

18,9 Gewichtsteile 1-(3'-Aminophenyl)-3-methyl-5-pyrazolon werden in 200 Volumenteilen Wasser und 20 Volumenteilen 33-gewichtsprozentiger Natronlauge gelöst. Zu dieser Lösung gibt man 15 Volumenteile Natriumnitritlösung 40 %ig und läßt das Gemisch bei 15-20 °C in 35 Volumenteile konzentrierte Salzsäure und 50 Gewichtsteile Eis eintropfen. Dann rührt man eine Stunde bei Überschuß an salpetriger Säure nach und beseitigt den Überschuß anschließend mit wenig fester Amidosulfonsäure.

Zur Lösung des Disazofarbstoffs gibt man 60 Gewichtsteile kristallisiertes Natriumacetat und läßt die Diazosuspension von 1-(3'-Aminophenyl)-3-methyl-5-pyrazolon unter gutem Rühren einlaufen. Der pH-Wert der Lösung des Trisazofarbstoffs beträgt etwa 5,5 und wird durch Zutropfen von etwa 25 Volumenteilen 33-gewichtsprozentiger Natronlauge auf 10,9 erhöht. Man rührt eine Stunde bei Raumtemperatur nach. Die so erhaltene Lösung wird im Vakuumtrockenschrank bei 60 °C zur Trockene eingeengt. Das graue Pulver färbt Leder in kräftigen dunkelbraunen Tönen von guten Echtheiten.

### Beispiel 2

Ersetzt man in Beispiel 1 die 1-Amino-8-naphthol-3,6-disulfonsäure durch 31,9 Gewichtsteile 1-Amino-8-naphthol-4,6-disulfonsäure und verfährt man wie dort bis zur Isolierung des Trisazofarbstoffs, so erhält man ein graues Pulver, das Leder in dunkelbraunen Tönen von guten Echtheiten färbt.

### Beispiel 3

Ersetzt man in Beispiel 1 die 1-Amino-8-naphthol-3,6-disulfonsäure durch ein Gemisch von 16,0 Gewichtsteilen 1-Amino-8-naphthol-3,6-disulfonsäure und 16,0 Gewichtsteilen 1-Amino-8-naphthol-4,6-disulfonsäure, das in 100 Volumenteilen Wasser und 15 Volumenteilen 33-gewichtsprozentiger Natronlauge gelöst wird und verfährt man wie dort bis zur Isolierung des Trisazofarbstoffs, so erhält man ein graues Pulver, das Leder in dunkelbraunen Tönen mit guten Echtheiten färbt.

### Beispiel 4

Man löst 31,9 Gewichtsteile 1-Amino-8-naphthol-3,6-disulfonsäure in 100 Volumenteilen Wasser und 10 Volumenteilen 33-gewichtsprozentiger Natronlauge (der pH-Wert der Lösung ist etwa 8) und gibt 15 Volumenteile Natriumnitritlösung 40 %ig zu dieser Lösung. Dann läßt man das Gemisch unter gutem Rühren bei etwa 20 °C in 35 Volumenteile konzentrierte Salzsäure und 100 Volumenteile Wasser eintropfen. Die braungelbe Diazosuspension wird eine Stunde nachgerührt. Während dieser Zeit muß noch ein Überschuß an salpetriger Säure vorhanden sein, der anschließend durch Zugabe von wenig fester Amidosulfonsäure beseitigt wird.

24,1 Gewichtsteile 3,3'-Dihydroxy-diphenylamin werden über Nacht in 200 Volumenteilen Wasser und 20 Volumenteilen 33-gewichtsprozentiger Natronlauge angerührt und gelöst. Unter gutem Rühren gießt man dann die oben erhaltene Diazosuspension von 1-Amino-8-naphthol-3,6-disulfonsäure in die alkalische Lösung von 3,3'-Dihydroxydiphenylamin bei 15-20 °C ein.

Danach hat das Reaktionsgemisch einen pH-Wert von etwa 5. Man stellt mit ca. 25 Volumenteilen 33-gewichtsprozentiger Natronlauge auf pH 10,9 und läßt eine Stunde bei Raumtemperatur rühren.

18,9 Gewichtsteile 1-(4'-Aminophenyl)-3-methyl-5-pyrazolon werden in 200 Volumenteilen Wasser und 20 Volumenteilen 33-gewichtsprozentiger Natronlauge gelöst. Zu dieser Lösung gibt man 15 Volumenteile Natriumnitritlösung 40 %ig und läßt das Gemisch bei 15-20 °C in 35 Volumenteile konzentrierter Salzsäure und 50 Gewichtsteile Eis eintropfen. Man rührt eine Stunde bei Überschuß an salpetriger Säure nach und beseitigt den Überschuß dann mit wenig fester Amidosulfonsäure.

Zur Lösung des Monoazofarbstoffs gibt man 60 Gewichtsteile kristallisiertes Natriumacetat und läßt die Diazosuspension von 1-(4'-Aminophenyl)-3-methyl-5-pyrazolon unter gutem Rühren bei 15-20 °C einlaufen. Der pH-Wert der Lösung des Disazofarbstoffs beträgt etwa 5 und wird durch Zugabe von etwa 25 Volumenteilen 33-gewichtsprozentiger Natronlauge auf 10,9 erhöht. Man rührt eine Stunde bei Raumtemperatur nach.

46,4 Gewichtsteile 4-Nitro-4'-amino-diphenylamin-2-sulfonsäure werden über Nacht in 300 Volumenteilen Wasser und 15 Volumenteilen 33-gewichtsprozentiger Natronlauge bei Raumtemperatur angerührt und gelöst. Zu dieser Lösung gibt man 15 Volumenteile Natriumnitritlösung 40 %ig und tropft das Gemisch bei etwa 20 °C in 35 Volumenteile konzentrierter Salzsäure und 50 Volumenteile Eis ein. Man rührt eine Stunde nach und nimmt den Überschuß an salpetriger Säure mit wenig fester Amidosulfonsäure weg.

Anschließend wird die Diazosuspension von 4-Nitro-4'-amino-diphenylamin-2-sulfonsäure in die Lösung des Disazofarbstoffs eingegossen und bei Raumtemperatur eine Stunde nachgerührt. Der pH-Wert wird mit ca. 25 Volumenteilen 33-gewichtsprozentiger Natronlauge bei 15-20 °C auf 10,9 gestellt und eine Stunde nachgerührt. Die so erhaltene Lösung des Trisazofarbstoffs wird im Vakuumtrockenschrank bei 60 °C zur Trockene eingeengt. Das graue Pulver färbt Leder in kräftigen dunkelbraunen Tönen von guten Echtheiten.

0 074 510

## Beispiel 5

Ersetzt man im Beispiel 4 die 1-Amino-8-naphthol-3-6-disulfonsäure durch ein Gemisch von 16,0 Gewichtsteilen 1-Amino-8-naphthol-3,6-disulfonsäure und 16,0 Gewichtsteilen 1-Amino-8-naphthol-4,6-disulfonsäure, das in 100 Volumenteilen Wasser und 15 Volumenteilen 33-gewichtsprozentiger Natronlauge gelöst wird und verfährt im übrigen wie in Beispiel 4 bis zur Isolierung des Trisazofarbstoffs beschrieben, so erhält man ein graues Pulver, das Leder in dunkelbraunen Tönen mit guten Echtheiten färbt.

## Beispiel 6

Ersetzt man in Beispiel 4 die 1-Amino-8-naphthol-3,6-disulfonsäure durch ein Gemisch von 16,0 Gewichtsteilen 1-Amino-8-naphthol-3,6-disulfonsäure und 16,0 Gewichtsteilen 1-Amino-8-naphthol-4,6-disulfonsäure, das in 100 Volumenteilen Wasser und 15 Volumenteilen 33-gewichtsprozentiger Natronlauge gelöst wird und ersetzt das 1-(4'-Aminophenyl)-3-methyl-5-pyrazolon durch 18,9 Gewichtsteile 1-(3'-Aminophenyl)-3-methyl-5-pyrazolon und verfährt im übrigen wie in Beispiel 4 bis zur Isolierung des Trisazofarbstoffs beschrieben, so erhält man ein graues Pulver, das Leder in dunkelbraunen Tönen mit guten Echtheiten färbt.

## Beispiel 7

Färben von Boxcalf, gegerbt mit einem handelsüblichen Chromgerbstoff und neutralisiert mit 0,4 % Natriumacetat und 0,5 % Natriumcarbonat :
Ein Lederfleck von 10 Gewichtsteilen Falzgewicht wird im laufenden Wacker-Faß in 15 Volumenteilen Wasser mit 0,10 Gewichtsteilen eines der gemäß den vorausgehenden Beispielen erhaltenen Trisazofarbstoffe bei 55-60 °C 20 Minuten gefärbt.
Zur Fettung verwendet man 0,05 Gewichtsteile einer Mischung aus Alkansulfonaten mit synthetischem Öl, 0,03 Gewichtsteile sulfiertes Klauenöl, 0,03 Gewichtsteile unsulfiertes Klauenöl und 0,03 Gewichtsteile eines synthetischen Lederöls auf der Basis chlorierter Kohlenwasserstoffe. Nachdem 30 Minuten gefettet wurde, wird mit 0,05 Gewichtsteilen Ameisensäure 85 %ig abgesäuert, anschließend gespült und abgewelkt. Nach dem Trocknen bei 60 °C erhält man eine kräftige dunkelbraune Färbung von guten Echtheiten.

## Beispiel 8

Beispiel für eine Bad-Velourfärbung auf Schaffell : 5,0 Gewichtsteile trockenes Schaffell werden in 150 Volumenteilen Wasser mit 0,11 Gewichtsteilen des Natriumsalzes eines Fettsäurekondensationsproduktes und 0,15 Volumenteilen Ammoniak 25 %ig eine Stunde bei 35 °C vorbehandelt. Der End-pH-Wert darf nicht unter 7,0 und nicht über 7,8 liegen, anderenfalls muß korrigiert und die Neutralisation während 20 Minuten fortgesetzt werden. Danach wird gespült.
Im frischen Bad werden 0,11 Gewichtsteile des Natriumsalzes eines Fettsäurekondensationsproduktes, 0,05 Volumenteile 25 %ig und 0,11 Gewichtsteile eines gemäß den Beispielen 1-6 erhaltenen Trisazofarbstoffs zugesetzt und zwei Stunden bei 25 °C gefärbt, sowie mit 0,1 Gewichtsteilen Ameisensäure 85 %ig abgesäuert. Das Färbebad soll einen pH-Wert von 5,0-5,3 haben. Anschließend wird gespült, abgewelkt und bei 60 °C getrocknet. Man erhält eine tiefe Braunfärbung des Pelzleders, während die Haarseite nur schwach angefärbt ist.

**Ansprüche** (für die Vertragsstaaten : CH, DE, FR, IT, LI, SE)

1. Wasserlösliche Trisazofarbstoffe der allgemeinen Formel

4-Nitro-4'-aminodiphenylamin-2-sulfonsäure $\longrightarrow$ A $\longrightarrow$ 3,3'-Dihydroxydiphenylamin $\longleftarrow$ B

worin A die 1-Amino-8-naphthol-3,6-disulfonsäure oder 1-Amino-8-naphthol-4,6-disulfonsäure oder Gemische der beiden Verbindungen bedeutet, und B das 1-(3'-bzw. 4'-Aminophenyl)-3-methyl-5-pyrazolon ist.

2. Verfahren zur Herstellung der wasserlöslichen Trisazofarbstoffe der in Anspruch 1 genannten allgemeinen Formel, dadurch gekennzeichnet, daß man die Komponente A diazotiert und mit 3,3'-Dihydroxy-diphenylamin zum Monoazofarbstoff kuppelt, diesen mit diazotierter Komponente B zum Disazofarbstoff umsetzt und diesen durch Vereinigung mit diazotierter 4-Nitro-4'-aminodiphenylamin-2-sulfonsäure in den Trisazofarbstoff überführt bzw. indem man wie beschrieben verfährt mit der Abänderung, daß die Komponente B und die 4-Nitro-4'-amino-diphenylamin-2-sulfonsäure in der Reihenfolge der Umsetzung vertauscht werden.

3. Verwendung der in Anspruch 1 genannten Trisazofarbstoffe zum Färben von Leder und Pelz.

4

**0 074 510**

**Ansprüche** (für den Vertragsstaat AT)

1. Verfahren zur Herstellung wasserlöslicher Trisazofarbstoffe der allgemeinen Formel

4-Nitro-4'-aminodiphenylamin-2-sulfonsäure —→ A —→ 3,3'-Dihydroxydiphenylamin ←— B

worin A die 1-Amino-8-naphthol-3,6-disulfonsäure oder 1-Amino-8-naphthol-4,6-disulfonsäure oder Gemische der beiden Verbindungen bedeutet, und B das 1-(3'-bzw. 4'-Aminophenyl)-3-methyl-5-pyrazolon ist, dadurch gekennzeichnet, daß man die Komponente A diazotiert und mit 3,3'-Dihydroxy-diphenylamin zum Monoazofarbstoff kuppelt, diesen mit diazotierter Komponente B zum Disazofarbstoff umsetzt und diesen durch Vereinigung mit diazotierter 4-Nitro-4'-aminodiphenylamin-2-sulfonsäure in den Trisazofarbstoff überführt bzw. indem man wie beschrieben verfährt mit der Abänderung, daß die Komponente B und die 4-Nitro-4' amino-diphenylamin-2-sulfonsäure in der Reihenfolge der Umsetzung vertauscht werden.

2. Verwendung der gemäß Anspruch 1 erhältlichen Trisazofarbstoffe zum Färben von Leder und Pelz.

**Claims** (for the Contracting State : CH, DE, FR, IT, LI, SE)

1. Water-soluble trisazo dyestuffs of the general formula

4-nitro-4'-aminodiphenylamine-2-sulfonic acid —→ A —→ 3,3'-dihydroxydiphenylamine ←— B

in which A is 1-amino-8-naphthol-3,6-disulfonic acid or 1-amino-8-naphthol-4,6-disulfonic acid, or a mixture of these two compounds, and B is 1-(3'- or 4'-aminophenyl)-3-methyl-5-pyrazolone.

2. A process for the manufacture of the water-soluble trisazo dyestuffs as claimed in claim 1, which comprises diazotizing component A and coupling it with 3,3'-dihydroxy-diphenylamine to give a monoazo dyestuff, reacting this dyestuff with diazotized component B to give a disazo dyestuff, and converting this dyestuff to the trisazo dyestuff by uniting it with diazotized 4-nitro-4'-amino-diphenylamine-2-sulfonic acid, or by operating as described while, however, changing the sequence of reaction of component B and 4-nitro-4'-amino-diphenyl-amine-2-sulfonic acid.

3. Use of the trisazo dyestuffs as claimed in claim 1 for the dyeing of leather and fur.

**Claims** (for the Contracting State AT)

1. A process for the manufacture of water-soluble trisazo dyestuffs of the general formula

4-nitro-4'-aminodiphenylamine-2-sulfonic acid —→ A —→ 3,3'-dihydroxydiphenylamine ←— B

in which A is 1-amino-8-naphthol-3,6-disulfonic acid or 1-amino-8-naphthol-4,6-disulfonic acid, or mixtures of these two compounds, and B is 1-(3'- or 4'-aminophenyl)-3-methyl-5-pyrazolone, which comprises diazotizing component A and coupling it with 3,3'-dihydroxydiphenylamine to give a monoazo dyestuff, reacting this dyestuff with diazotized component B to give a disazo dyestuff, and converting this dyestuff to the trisazo dyestuff by uniting it with diazotized 4-nitro-4'-amino-diphenylamine-2-sulfonic acid, or by operating as described while, however, changing the sequence of reaction of component B and 4-nitro-4'-amino-diphenylamine-2-sulfonic acid.

2. Use of the trisazo dyestuffs obtained according to claim 1 for the dyeing of leather and fur.

**Revendications** (pour les Etats contractants : CH, DE, FR, IT, LI, SE)

1. Colorants trisazoïques solubles dans l'eau, de formule générale

Acide nitro-4 amino-4' diphénylamine-sulfonique-2 —→ A —→ Dihydroxy-3,3' diphénylamine ←— B

où A est l'acide amino-1 hydroxy-8 naphtalène-disulfonique-3,6 ou l'acide amino-1 hydroxy-8 naphtalène-disulfonique-4,6 ou des mélanges de ces deux composés, et B est la (amino-3' ou 4' phényl)-1 méthyl-3 pyrazolone-5.

2. Procédé pour la préparation des colorants trisazoïques solubles dans l'eau ayant la formule générale donnée dans la revendication 1, caractérisé en ce qu'on diazote le composant A et qu'on le copule avec de la dihydroxy-3,3' diphénylamine pour obtenir un colorant monoazoïque, qu'on fait réagir ce dernier avec le composant diazoté B pour obtenir le colorant disazoïque, et qu'on transforme ce dernier, par concentration avec de l'acide nitro-4 amino-4' diphénylamine-sulfonique-2 diazoté en le

5

colorant trisazoïque, ou bien que l'on procède comme il est décrit ci-dessus, avec comme modification le fait que l'on intervertit le composant B et l'acide nitro-4 amino-4' diphénylamine-sulfonique-2 dans la séquence des réactions.

3. Utilisation des colorants trisazoïques mentionnés dans la revendication 1 pour la teinture des cuirs et peaux.

**Revendications** (pour l'Etat contractant AT)

1. Procédé pour la préparation de colorants trisazoïques solubles dans l'eau de formule générale

Acide nitro-4 amino-4' diphénylamine-sulfonique-2 $\longrightarrow$ A $\longrightarrow$ Dihydroxy-3,3' diphénylamine $\longleftarrow$ B

où A est l'acide amino-1 hydroxy-8 naphtalène-disulfonique-3,6 ou l'acide amino-1 hydroxy-8 naphtalène-disulfonique-4,6 ou des mélanges des deux composés, et B est la (amino-3' ou 4' phényl)-1 méthyl-3 pyrazolone-5, caractérisé en ce qu'on diazote le composant A et qu'on le copule avec de la dihydroxy-3,3' diphénylamine pour obtenir le colorant monoazoïque, que l'on fait réagir ce dernier sur le composant diazoté B pour obtenir le colorant disazoïque, et qu'on transforme ce dernier, par combinaison avec l'acide nitro-4 amino-4' diphénylamine-sulfonique-2 diazoté en le colorant trisazoïque, ou bien que l'on procède comme il est décrit ci-dessus, avec comme modification le fait que l'on intervertit le composant B et l'acide nitro-4 amino-4' diphénylamine-sulfonique-2, dans la séquence des réactions.

2. Utilisation des colorants trisazoïques obtenus selon la revendication 1 pour la teinture des cuirs et peaux.